# EUROPEAN PATENT APPLICATION

(11) **EP 2 201 846 A1**
(43) Date of publication of application: **30.06.2010**
(21) Application number: 09252697.9
(22) Date of filing: 30.11.2009
(51) Int. Cl.: A23L 1/05, A23L 1/053, A23L 1/09, A23L 1/164

(54) **Non-sweet binder compositions and methods of making and using same**

(30) Priority: 01.12.2008 US 325704
(71) Applicant: Kraft Foods Global Brands LLC, Northfield, IL 60093 (US)
(72) Inventor: Coleman, Edward Charles, New Fairfield, Connecticut 06812 (US)
(74) Representative: Setna, Rohan P.

(57) **Abstract**

Non-sweet binder compositions, food products comprising such binder compositions, and methods of preparing food products comprising such binder compositions are provided.

## Description

### FIELD OF THE INVENTION

The present invention relates to binder compositions, and more particularly, to non-sweet binder compositions, food products comprising such binder compositions, and methods of preparing food products comprising such binder compositions.

### BACKGROUND OF THE INVENTION

Conventional binder compositions, used, for example, in snack or meal replacement bars and/or clusters generally include large amounts of corn syrup or other carbohydrates to provide the required viscosity and cohesion. However, there are a number of disadvantages to such binder compositions. First, the incorporation of high amounts of sugar in a food product undesirably results in higher calories. Second, conventional binder compositions tend to be sweet in flavor profile, which generally results in limited applicability for non-sweet and/or savory food products. Third, many consumers desire food products, including snack and/or meal replacement bars, providing increased nutritive value from protein and/or fiber with less sugar.

Lower calorie food products have typically been made with binder compositions containing large amounts of sugar alcohols (such as glycerin, maltitol, sorbitol, erythritol, etc.). These food products must generally be sized smaller in weight and volume for any targeted maximum calorie content due to the high sugar alcohol content. Moreover, significant loading levels of sugar alcohols in food products are known to result in digestive discomfort or upset for some consumers.

Attempts to use conventional binder compositions in non-sweet and/or savory food products by reducing the levels of sugar syrups and/or sugar alcohols, but maintaining levels sufficient for the binding requirements, have generally been unsuccessful since at least some sweet taste remains. Indeed, few savory food bars and/or clusters exist in the marketplace today due, in part, to the lack of satisfactory non-sweet binder technology.

Thus, there remains a need for improved binder compositions that offer the viscosity, cohesion, and functional properties of traditional binders but without the high caloric content and sweet taste from sugar and/or sugar alcohols. Further, there remains a need for such a binder composition that advantageously provides significant levels of protein and fiber. Ideally, such systems should be usable in intermediate moisture food systems (i.e., where water activity is in the range of about 0.2 to about 0.8) and also in high moisture systems (i.e., where water activity is greater than about 0.8). The present invention may be used to fulfill these needs, as well as other needs and benefits, as will be apparent from the following description of embodiments of the present invention.

### SUMMARY OF THE INVENTION

The present invention provides aqueous-based non-sweet binder compositions, food products comprising such aqueous-based non-sweet binder compositions, and methods of preparing food products comprising such aqueous-based non-sweet binder compositions.

According to one aspect, a food product comprising an aqueous based non-sweet binder composition is provided. The binder composition comprises soluble fiber, protein, and fat, and is essentially free of added high calorie sweetener. The binder composition has a first viscosity at a first temperature effective for being mixed with food product components, and the binder composition has a second viscosity at a second temperature effective for binding the food product components.

According to yet another aspect, a method of preparing a food product comprising an aqueous based non-sweet binder composition is provided. The binder composition comprises soluble fiber, protein, and fat, and is essentially free of added high calorie sweetener. The method comprises heating a binder composition to a first temperature such that the binder composition has a first viscosity effective for being mixed with food product components, mixing the heated binder composition with the food product components to form a mixture of binder composition and aggregated food product components, and cooling the mixture to a second temperature such that that the binder composition has a second viscosity effective to bind the aggregated food product components.

### DETAILED DESCRIPTION

As used herein, the term "binder" is intended to mean a substance that produces or promotes cohesion in loosely assembled ingredients. Because the binder composition described herein is intended to be used in the production of food products, it is preferably a food-grade binder.

More specifically, the present invention provides a binder composition comprising a blend of protein and fiber. The blend is highly soluble in an aqueous system and delivers viscosity and functional properties similar to that of corn syrup. However, the binder composition of the present invention is preferably essentially free of added high calorie sweeteners. As used herein, "essentially free" refers to less than 5% by weight, preferably less than 1% by weight, and most preferably none. "High calorie sweeteners" refers to sugar, sugar alcohols, and the like. Thus, the binder composition of the present invention delivers the desired viscosity and cohesion without delivering the high caloric content and sweetness of conventional corn syrup-based binders. While typical sugar-based binders used in snack bars can contribute about 90 calories per serving (based on a serving size of 40 grams of a food product comprising about 40-50% binder composition), the binder composition of the present invention contributes only about half that (i.e., only about 45 calories) per serving. In addition, while conventional sugar-based binders contain very little or no protein or fiber, the binder composition of the present invention advantageously delivers significant levels of protein and fiber, preferably about 1-2 grams of protein per serving and about 5-8 grams of fiber per serving. Thus, while the binder composition of the present invention is particularly advantageous for use in non-sweet and/or savory food products, with the addition of a low calorie artificial sweetener, it can also be beneficially used to provide a sweet binder system with higher fiber and protein content and less calories than conventional binders.

The binder composition of the present invention preferably contains about 10% to about 70%, preferably about 20% to about 60%, and most preferably about 30% to about 50% by weight of fiber. Fiber suitable for use with the present invention can be of plant, animal, microbial or synthetic origin. Soluble fibers are preferred, including, for example, soluble oligosaccharides, including fructooligosaccharides and inulin, polysaccharides, hydrocolloids, cyclodextrins, resistant starches, resistant maltodextrins, corn fiber, and the like. In one preferred form, the soluble fiber comprises a mixture of oligofructose, gum acacia, and polydextrose. Preferably the binder composition comprises about 10 to about 30 weight % oligofructose, about 10 to about 30 weight % gum acacia, and about 5 to about 20 weight % polydextrose. In one form, a preferred ratio of oligofructose, gum acacia, and polydextrose is about 1:1:0.5.

The binder composition of the present invention preferably contains about 2% to about 20%, more preferably about 5% to about 10%, by weight of protein. Suitable protein includes, for example, dairy protein, soy protein, wheat protein, and grain protein such as rice and corn. In one form, the protein preferably comprises hydrolyzed or unhydrolyzed dairy protein and/or hydrolyzed or unhydrolyzed soy protein.

The binder composition preferably comprises less than about 20% by weight of fat, more preferably about 2% to about 20%, and most preferably about 5% to about 15%, by weight of fat. In another form, the binder composition is essentially free of fat. While the binder composition itself preferably comprises less then about 20% by weight of fat, the total fat content of a finished food product comprising the binder composition may be higher depending on the additional ingredients and/or food components. The fat may be in liquid form, solid form and/or semi-solid form. The fat can be from plant, animal, or synthetic origin. Examples of fats suitable for use in the present invention include edible fractionated fats, partially fractionated fats, hydrogenated oils, partially hydrogenated oils, and unsaturated oils, including, for example, canola oil, coconut oil, palm oil, palm kernel oil, cottonseed oil, safflower oil, sunflower oil, soy oil, corn oil, monoglyceride and/or lecithin. In one preferred form, the fat comprises sunflower oil.

The binder composition is preferably aqueous based, preferably containing a moisture content of about 10% to about 50%, and more preferably about 20% to about 30% by weight. The moisture content includes added water as well as any water included in any component (e.g. fruit juice, stock, or the like).

The binder composition may contain up to about 5% optional ingredients such as, glycerin, emulsifier, sweetness suppressor, salts, flavor, vitamins, minerals, natural or artificial sweeteners, and health and wellness enablers such as omega 3 fatty acids, bioactives, and antioxidants, so long as they do not interfere with the desired functionality of the binder.

In one preferred form, the binder composition comprises about 10 to about 30 weight % oligofructose, about 10 to about 30 weight % gum acacia, about 5 to about 20 weight % polydextrose, about 5 to about 15 weight % protein, about 5 to about 25 weight % fat, and about 10 to about 40 weight % water.

The binder composition of the present invention may advantageously be incorporated in food products requiring a binder where it is desired to control sweetness/non-sweetness levels to an extent not normally obtainable using conventional binders. Such food products may include, for example, a snack or meal replacement bars, mixes, and/or clusters. Thus, in accordance with another aspect of the invention, a food product is provided comprising a binder composition as described herein.

The binder compositions described herein can be incorporated in any suitable food product (i.e., product needing a binder) to allow the cohesion of the ingredients and facilitate the shaping of the final food product. Alternatively, or in addition, the binder composition may be used like a glaze, to adhere inlays onto surfaces of formed food products. Because the basic binder composition of the present invention is preferably bland and/or non-sweet, it has little or no effect on the taste or flavor of the final food product. This advantageously minimizes the introduction of any undesirable tastes or flavors, allows any desired natural and/or artificial flavors to be detectable at lower concentrations, and allows a greater range of applicable flavors, particularly, non-sweet and/or savory flavors. In one form, the binder composition may be used as a carrier for desired flavors. Since the binder composition presented herein does not have a sweet taste, it can be advantageously used in the preparation of savory foods (such as savory snack food), crispy crunchy foods and/or salty foods (such as a salty snack food). Of course, the binder composition of the present invention can also be used, if desired, in a food product intended to be sweet. In fact, the present binder composition can be used to achieve a wide range of sweet to non-sweet products by simply adding the desired food components and any desired sweeteners and/or sweetness suppressors to the food product itself, the binder composition, or both.

The binder composition of the present invention can be added to many varieties of food components, for example, cheese and dairy products, cheese substitute, fresh or dried fruit and/or vegetable pieces, spices, nuts, seeds, grains, soy crisps, rice crisps, wheat or bran flakes, pieces of bread or crackers, pieces of meat, dried meat product, or meat imitations, protein nuggets, cereal, granola, natural and/or artificial flavors, and the like, as well as mixtures thereof. When the binder is added to snack and/or meal replacement bars and/or clusters, it is useful in binding the ingredients of the bars and/or clusters. Prepared food products incorporating the binder composition of the present invention, will not disintegrate upon refrigeration or thawing, so that the binding of foods is maintained.

Although bars, mixes, and/or clusters are some preferred applications of the binder composition of the present invention, any other type food product normally incorporating a binder composition is contemplated herein. Of course, the concentration of the binder composition can be adapted depending on its use or the product in which it is incorporated.

According to yet another aspect of the invention, a method is provided for incorporating the binder composition of this invention in a food product of aggregated food components. While any suitable method may be used to raise the viscosity of the binder composition to a level allowing desired mixing of the binder composition and food components (generally in the range of about 500 cps to about 5000 cps, more preferably in the range of about 500 cps to about 3000 cps), and then to lower the viscosity to a level allowing the binder composing to bind the food components in aggregated form (generally in the range of about 1000 cps to about 5000 cps), one preferred method involves heating the binder composition of the present invention to a temperature at which the binder composition has a viscosity which allows mixing of binder and other ingredients (generally about 150°F to about 200°F, about preferably 160°F to about 180°F), mixing the heated binder composition with the food components, and allowing the mixture to cool to a temperature at which the binder composition has a viscosity sufficient to maintain the structure of the final product (generally below about 120°F, and preferably about 50°F to about 100°F) to aggregate the food components.

The binder composition can be produced and stored until needed. Alternatively, the binder composition can be made in a continuous fashion and added directly to the food components. In order to add the binder composition to the food components and promote satisfactory coating and aggregation of the food components, the binder composition is preferably first heated to a temperature effective to solubilize the ingredients into a generally homogeneous mass with a viscosity that allows thorough coating of the food components (generally a temperature of about 150-200°F over about 10-15 minutes). In one preferred form, the heating is performed in a steam jacketed kettle with agitation. Next, dry food components (for example, soy crisps, rice crisps, oats, nuts, seeds, wheat flakes, etc.) are added to the heated binder and mixed to provide the desired mixing and coating. The mixing is preferably performed by gentle mixing (so as not to crush the food components) in a horizontal or vertical mixer for a few minutes, generally about 2 to about 8 minutes. The mixture is initially cooled (generally by natural heat transfer or by use of chilled rollers) to a level which allows aggregation and allows the mixture to be shaped or formed into the desired product (generally a temperature below about 120°F, preferably about 50°F to about 100°F). Once shaped or formed, the mixture is cooled to a storage temperature (generally ambient temperature, at which point the mixture is not easily formed or shaped except by, for example, cutting or slicing techniques). Food products comprising the binder composition of the present invention are preferably shelf stable (i.e., stable at ambient temperature). Savory inlays, such as meat, cheese, and/or vegetable bits, flavoring compounds, and vitamins and minerals may be added together with the dry food components or independently depending on the equipment used.

A single step manufacturing process is also feasible using this binder composition. For example, the binder ingredients and dry food components are added to a steam-jacketed kettle with temperature control. The mixture is heated for about 5 minutes to about 160°F in the kettle using constant but gentle agitation. The resulting mixture is then cooled to below about 100°F with dry ice. Alternatively, a jacketed kettle with cooling capability could also be used. The cooled mixture is then deposited on a bar sheeting line which involves compression, cooling, and cutting.

In one preferred form, the finished food product comprises about 20% to about 60% by weight binder composition and about 40% to about 80% by weight food components. Of course, the proportion of binder composition can be adapted depending on the characteristics of the food product in which it is incorporated, including the size of the food components and the desired texture (i.e., chewy or crunchy). For example, where the dry food ingredients comprise small pieces, less binder will generally be required to obtain the desired mixture. However, where the food components are larger pieces, generally more binder will be required.

The resulting food product may be dried (generally at about 250°F to about 325°F, for about 1 minute to about 10 minutes) to achieve the desired water activity and/or moisture content. In one preferred form, the Aw of the food product is in the range of about .30 to about .70. The moisture content of the food product is preferably about 3% to about 20%, more preferably about 8% to about 12%.

### EXAMPLES

The following examples further illustrate various features of the invention, but are not intended to limit the scope of the invention as set forth in the appended claims. Unless otherwise noted, all percentages and ratios are by weight.

### EXAMPLE 1

A savory crouton bar was prepared according to the formula provided in Table 1.

| **Table 1** | |
|---|---|
| **Ingredient** | **Weight Percent** |
| **Binder composition** | |
| Oligofructose | 5.47 |
| Hydrolyzed dairy protein | 2.19 |
| Gum acacia | 7.66 |
| Polydextrose | 2.19 |
| Sunflower oil | 6.56 |
| Water | 10.94 |

| **Food Components** | |
|---|---|
| Rice crisps | 8.33 |
| Almonds | 3.33 |
| Sunflower seeds | 5.00 |
| Crisp noodles | 5.00 |
| Whole grain croutons | 43.33 |

The dry binder ingredients (i.e., oligofructose, hydrolyzed dairy protein, gum acacia and polydextrose) were combined and mixed in a vertical mixer. The liquid binder ingredients were then added and the binder composition was heated to about 180°F (over about 5-10 minutes). The heated binder composition formed a liquid (with a viscosity of about 1000-2000 cps) to which the food components were added and mixed to form aggregates. After mixing, the resulting product had cooled to about 100°F and was formed into bars using known sheeting and roller processes. Formed bars were dried at 300°F for 5 minutes to achieve the desired Aw of about 0.40 and a moisture content of about 9.5%. In the resulting 40 gram bars, the binder composition contributed about 30 calories, 6 grams of fiber and 1 gram of protein.

### EXAMPLE 2

A savory bar with tomato pieces was prepared according to the formula provided in Table 2.

| **Table 2** | |
|---|---|
| **Ingredient** | **Weight Percent** |
| **Binder composition** | |
| Oligofructose | 3.4 |
| Hydrolyzed dairy protein | 1.4 |
| Gum acacia | 4.7 |
| Polydextrose | 1.4 |
| Sunflower oil | 4.1 |
| Water | 6.1 |

| **Food Components** | |
|---|---|
| Soy crisps | 5.8 |
| Rice crisps | 5.8 |
| Oats | 11.4 |
| Almonds | 11.4 |
| Sunflower seeds | 14.4 |
| Crisp noodles | 8.6 |
| Wheat flakes | 5.8 |
| Sundried tomato pieces | 15.7 |

The dry binder ingredients (oligofructose, hydrolyzed dairy protein, gum acacia and polydextrose) were combined and mixed in a vertical mixer. The liquid binder ingredients were then added and the binder composition was heated to about 180°F over about 5-10 minutes. The heated binder composition formed a liquid to which the food components were added and mixed to form aggregates. After the mixture had cooled to about 100°F, the mixture was formed into bars using known sheeting and roller processes. Formed bars were dried at 300°F for 5 minutes to achieve the desired Aw of about 0.35 and a moisture content of about 9.0%. In the resulting 40 gram bars, the binder composition contributed about 21calories, 4 grams of fiber and 1 gram of protein.

### EXAMPLE 3

A savory bar with cheese and bacon was prepared according to the formula provided in Table 3.

| **Table 3** | |
|---|---|
| **Ingredient** | **Weight Percent** |
| **Binder composition** | |
| Oligofructose | 7.4 |
| Hydrolyzed dairy protein | 3.2 |
| Gum acacia | 10.6 |
| Polydextrose | 2.8 |
| Sunflower oil | 6.7 |
| Water | 13.3 |

| **Food Components** | |
|---|---|
| Soy crisps | 4.1 |
| Rice crisps | 6.2 |
| Oats | 10.3 |
| Almonds | 8.3 |
| Sunflower seeds | 10.3 |
| Crisp noodles | 6.2 |
| Wheat flakes | 4.1 |
| Bacon bits | 6.1 |
| Cheese flavor | 0.4 |

The dry binder ingredients (oligofructose, hydrolyzed dairy protein, gum acacia and polydextrose) were combined and mixed in vertical mixer. The liquid binder ingredients were then added and the binder composition was heated to about 180°F over about 5-10 minutes. The heated binder composition formed a liquid to which the food components were added and mixed to form aggregates. After the mixture cooled to about 100°F, the mixture was formed into bars using known sheeting and roller processes. Formed bars were dried at 300°F for 5 minutes to achieve the desired Aw of about 0.48 and a moisture content of about 12%. In the resulting 40 gram bars, the binder composition contributed about 37 calories, 8.3 grams of fiber and 1.3 gram of protein.

### EXAMPLE 4

A savory bar with cheese and tomato was prepared according to the formula provided in Table 4.

| **Table 4** | |
|---|---|
| **Ingredient** | **Weight Percent** |
| **Binder composition** | |
| Oligofructose | 7.4 |
| Hydrolyzed dairy protein | 3.2 |
| Gum acacia | 10.6 |
| Polydextrose | 2.8 |
| Sunflower oil | 6.7 |
| Water | 13.3 |

| **Food Components** | |
|---|---|
| Soy crisps | 4.1 |
| Rice crisps | 4.1 |
| Oats | 8.3 |
| Almonds | 7.7 |
| Sunflower seeds | 9.3 |
| Crisp noodles | 6.2 |
| Wheat flakes | 4.1 |
| Blend of savory pieces/toppers | 8.3 |
| Sundried tomato pieces | 3.3 |
| Cheese flavor | 0.6 |

The dry binder ingredients (oligofructose, hydrolyzed dairy protein, gum acacia and polydextrose) were combined and mixed in a vertical mixer. The liquid binder ingredients were then added and the binder composition was heated to about 180°F over about 5-10 minutes. The heated binder composition formed a liquid to which the food components were added and mixed to form aggregates. After the mixture cooled to about 100°F, the mixture was formed into bars using known sheeting and roller processes. Formed bars were dried at 300°F for 5 minutes to achieve the desired Aw of about 0.48 and a moisture content of about 13%. In the resulting 40 gram bars, the binder composition contributed about 37 calories, 8.3 grams of fiber and 1.3 gram of protein.

The resulting food products of Examples 1-4 were taste tested by six panelists. All were judged to have excellent flavor and texture receiving scores of approximately 7.5 on a 0 to 9-point scale (with 9 being the best). The food products were said to have clean flavor with no sweetness, excellent savory flavor impact with no sweetness, excellent crisp texture compatible with savory products, and uniqueness particularly suited for savory products.

Although the food products of Examples 1-4 were formed into bars, it will be understood by one of ordinary skill in the art, that they could have been formed into any desired shape and/or size or could be broken into pieces or crushed, for example, for use in a soup or salad application.

Although the invention has been described with respect to preferred embodiments, it will be apparent that the invention is capable of numerous modifications and variations, apparent to those skilled in the art, without departing from the spirit and scope of the invention.

## Claims

1. A food product comprising an aqueous based non-sweet binder composition, the binder composition comprising soluble fiber, protein, and fat, and being essentially free of added high calorie sweetener,
wherein, the binder composition has a first viscosity at a first temperature effective for being mixed with the food product components and, the binder composition has a second viscosity at a second temperature effective for binding the food product components.

2. The food product of claim 1, wherein the soluble fiber is selected from the group consisting of oligosaccharides, polysaccharides, hydrocolloids, cyclodextrins, resistant starches, resistant maltodextrins, corn fiber, and mixtures thereof.

3. The food product of claim 1 or claim 2, wherein the soluble fiber comprises a mixture of oligofructose, gum acacia, and polydextrose.

4. The food product of any of the preceding claims wherein the soluble fiber comprises a mixture of oligofructose, gum acacia and polydextrose, the oligofructose composing about 10 to about 30 weight percent of the binder composition, the gum acacia composing about 10 to about 30 weight percent of the binder composition, and polydextrose composing about 5 to about 20 weight percent of the binder composition.

5. The food product of any of the preceding claims wherein the soluble fiber comprises a mixture of oligofructose, gum acacia, and polydextrose in a ratio of about 1:1:0.5.

6. The food product of any of the preceding claims, wherein the binder composition contributes less than about 45 calories per 40 g serving of food product.

7. The food product of any of the preceding claims, wherein the binder composition comprises at least about 5 weight percent protein.

8. The food product of any of the preceding claims, wherein the binder composition comprises at least about 20 weight percent fiber.

9. A method of preparing a food product comprising an aqueous based non-sweet binder composition comprising soluble fiber, protein, fat, and being essentially free of added high calorie sweetener, the method comprising:
heating a binder composition to a first temperature such that the binder composition has a first viscosity effective for being mixed with the food product components;
mixing the heated binder composition with the food product components to form a mixture of binder composition and aggregated food product components; and
cooling the mixture to a second temperature such that that the binder composition has a second viscosity effective to bind the aggregated food product components.

10. The method of claim 9, wherein the soluble fiber is selected from the group consisting of oligosaccharides, polysaccharides, hydrocolloids, cyclodextrins, resistant starches, resistant maltodextrins, soluble corn fiber, and mixtures thereof.

11. The method of claim 9 or claim 10, wherein the soluble fiber comprises a mixture of oligofructose, gum acacia, and polydextrose.

12. The method of any of claims 9 to 11 wherein the soluble fiber comprises a mixture of oligofructose, gum acacia and polydextrose, the oligofructose composing about 10 to about 30 weight percent of the binder composition, the gum acacia composing about 10 to about 30 weight percent of the binder composition, and polydextrose composing about 5 to about 20 weight percent of the binder composition.

13. The method of any of claims 9 to 12 wherein the soluble fiber comprises a mixture of oligofructose, gum acacia, and polydextrose in a ratio of about 1:1:0.5.

14. The method of any of claims 9 to 13, wherein the binder composition contributes less than about 45 calories per 40 g serving of food product.

15. The method of any of claims 9 to 14, wherein the binder composition contributes at least about 1 g protein per 40 g serving of food product.
